**Europäisches Patentamt**

**European Patent Office**

**Office européen des brevets**

(19)

(11) Veröffentlichungsnummer: **0 263 247 B1**

# EUROPÄISCHE PATENTSCHRIFT

(12)

(45) Veröffentlichungstag der Patentschrift: **19.06.91**

(51) Int. Cl.⁵: **B64C 13/30**

(21) Anmeldenummer: **87110209.1**

(22) Anmeldetag: **15.07.87**

(54) **Fluggerätesteuerung.**

(30) Priorität: **08.10.86 DE 3634250**

(43) Veröffentlichungstag der Anmeldung:
**13.04.88 Patentblatt 88/15**

(45) Bekanntmachung des Hinweises auf die
Patenterteilung:
**19.06.91 Patentblatt 91/25**

(84) Benannte Vertragsstaaten:
**DE FR GB IT NL**

(56) Entgegenhaltungen:
DE-C- 609 853     DE-C- 669 065
DE-C- 723 033     GB-A- 466 462
US-A- 2 697 568   US-A- 3 469 807

(73) Patentinhaber: **DORNIER GMBH**
**Postfach 1420**
**W-7990 Friedrichshafen 1(DE)**

(72) Erfinder: **Thomas, Dieter, Dipl.-Ing.**
**Buchenstrasse 15a**
**W-8080 Fürstenfeldbruck(DE)**

(74) Vertreter: **Landsmann, Ralf, Dipl.-Ing.**
**DORNIER GMBH - Patentabteilung - Kleeweg**
**3**
**W-7990 Friedrichshafen 1(DE)**

## Beschreibung

Die Erfindung betrifft Fluggerätesteuerungen, enthaltend eine Quersteuerung mit Quersteuerflächen und Steuergetriebe, eine Seitensteuerung mit Seitensteuerflächen und Seitensteuergetriebe, insbesondere für Fluggeräte, deren Tragflügelendteile sogenannte winglets, Endscheiben oder dergleichen aufweisen, wobei die Endteile die konventionell zur Seitensteuerung dienenden Steuerflächen tragen.

Bei Fluggeräten, insbesondere mit gepfeiltem oder deltaförmigem Tragwerk und an den Tragflügeln angeordneten Endteilen, die gegenüber den Tragflügeln eine V-Stellung aufweisen oder zu diesen eine vertikale Lage einnehmen, liegen die an diesen Endteilen angeordneten Steuerflächen, die konventionell als Seitenruder dienen, weiter vom Fluggeräteschwerpunkt entfernt als die konventionell zur Quersteuerung um die Fluggerätelängsachse dienenden, an der Tragflügelhinterkante angeordneten Ruderflächen.
Das trifft auch auf gewisse Flügelkonfigurationen zu, deren Endteile in der Tragflügelhauptebene verlaufen, z.B. bei Flugzeugen mit Deltaflügeln.
Konstruktiv bedingt liegen die Angriffspunkte der Luftkräfte der Ruderfläche der Querruder an den Tragflügelhinterkanten beider Flugzeugseiten also näher dem Flugzeugschwerpunkt.

Für die Steuerung der genannten Art können, wie allgemein bekannt, auftrieberzeugende Körper und bzw. oder Körper zur Erzeugung von Luftwiderstand, etwa im Sinne von Spoilern, eingesetzt werden.
Bei Fluggeräten der genannten Art, insbesondere auch solchen in Entenflügel-Konfiguration, kann sich in gewissen Flugzuständen jedoch die Wirkung von Seitensteuerung und Quersteuerung vertauschen, da beide Steuerungsarten in ihrer Wirkung nahezu oder sogar vollständig gleichwertig bzw. gleichartig sind.

Es ist bekannt, Seitensteuerflächen an Fluggeräten als Störflächen zur Giersteuerung arbeiten zu lassen und auch die Rollsteuerung durch Störklappensysteme zu bewirken (DE-PS 29 09 244).

Ebenso ist es bekannt, Klappenanordnungen an Endscheiben von Tragflügeln zum Steuern bzw. Bremsen zu benutzen. Die Klappenausschläge sind danach gegensinnig oder gleichsinnig, sowie einander überlagernd (DE-OS 34 15 976).

Ferner ist es durch die DE-PS 609 853 an schwanzlosen Flugzeugen mit pfeilförmigen Tragflügeln bekannt, an den Tragflügelenden angeordnete Seitenflossen oder Seitenruder sowohl gleichmäßig als auch gegenläufig oder auch einzeln verstellbar und feststellbar vorzusehen. Die bekannte Ausbildung soll durch die verschiedenen Einstellbewegungen zur Trimmung der Seitensteuerung dienen.

Aufgabe der vorliegenden Erfindung ist es, dem Piloten bei Fluggeräten der genannten Art die Steuerung des Fluggerätes zu erleichtern, so daß die Ansteuerung der Seiten- und Quersteuerflächen trotz ihrer von der konventionellen Wirkung abweichenden Wirkung in herkömmlicher Weise möglich ist, das heißt, daß nach wie vor über die Fußpedale die Seitensteuerung und über die Steuersäule die Quersteuerung des Fluggerätes bewirkt wird.

Die gestellte Aufgabe ist erfindungsgemäß durch die Ausbildung einer Fluggerätesteuerung gemäß den Merkmalen des Hauptanspruches und in dessen weiterer, vorteilhafter Ausgestaltung nach den Merkmalen der Unteransprüche gelöst.

Mit einer erfindungsgemäß ausgebildeten Fluggerätesteuerung wird einerseits, trotz unkonventioneller Wirkungsweise der Ruderflächen, der Pilot davon entlastet, auf Umkehrwirkungen an den Rudern reagieren zu müssen und entsprechend umzudenken. Außerdem erlaubt die erfindungsgemäße Ausbildung die Herabsetzung von Störeffekten, die z.B. in Abhängigkeit von Widerstandserhöhungen bei Steuerflächen auftreten, die um Umkehrwirkungen an den Rudern auszugleichen, relativ groß bemessen sind.

In der Zeichnung sind Ausführungsbeispiele gemäß der Erfindung dargestellt, die in der nachfolgenden Beispielsbeschreibung näher erläutert werden.

In der Zeichnung zeigt:

Figur 1  in perspektivischer, schematischer Darstellung eine Fluggeräte-Konfiguration mit Entenflügeln, gepfeiltem Haupttragwerk und an diesem angeordneten Flügelendteilen, in Verbindung mit der Fluggerätesteuerung und den zugehörigen Steuerflächen,

Figur 2a  eine Einzelheit des Steuergetriebes der Fluggerätesteuerung nach Figur 1, schematisiert dargestellt,

Figur 2b  eine weitere Einzelheit des Steuergetriebes der Fluggerätesteuerung nach Figur 1, schematisiert dargestellt.

Bei dem in der Zeichnung dargestellten Fluggerät sind mit 1 der Fluggeräterumpf, mit 2 die Flügel des Haupttragwerks, mit 4 die Entenflügel und mit 5 bzw. 5' die Flügelendteile an den Tragflügeln bezeichnet, wobei die Endteile 5 bzw. 5' - (winglets) gegenüber den Tragflügeln 2 in bezug auf ihre Hauptebene eine geringfügig aus der vertikalen nach außen geneigte Lage einnehmen.
Ferner sind bei der beschriebenen Flugzeug-Konfiguration die Tragflügel 2 des Tragwerks nach rückwärts gepfeilt angeordnet und die Antriebsanlage, bestehend aus einem oder mehreren, hier nicht näher dargestellten Antriebsmotoren und daran angeschlossenen Propellern am Rumpfende hinter dem Haupttragwerk 2 vorgesehen.

Die Fluggerätesteuereinrichtung 17 enthält Höhensteuerflächen 10 an den Entenflügeln 4, Steuerflächen 11 bzw. 11' an den Flügelendteilen 5 bzw. 5', die allgemein auch als "winglets" bezeichnet werden, sowie Steuerflächen 12 bzw. 12', die sich entlang der Hinterkante der Tragflügel 2 erstrecken.

Die Fluggerätesteuereinrichtung 17 enthält ferner zur Ansteuerung der Steuerflächen 10; 11, 11' bzw. 12, 12' Steuergetriebe 18, 20 bzw. 19, und mit 15 bzw. 16, 16' sind die vom Piloten zu betätigenden und über die Steuergetriebe 18, 20 bzw. 19 an den Steuerflächen 10; 11, 11' bzw. 12, 12' angreifenden Steuerorgane, das heißt die Steuersäule und die Fußpedale bezeichnet. Die von der konventionellen Arbeitsweise abweichende Funktion Betätigungsorgane 15 bzw. 16, 16' ist später noch näher erläutert.

Beim gezeigten Ausführungsbeispiel ist die Höhensteuerung in konventioneller Bauweise und Wirkung ausgeführt, wobei der Anschluß an die Steuersäule 15 vorgesehen ist.

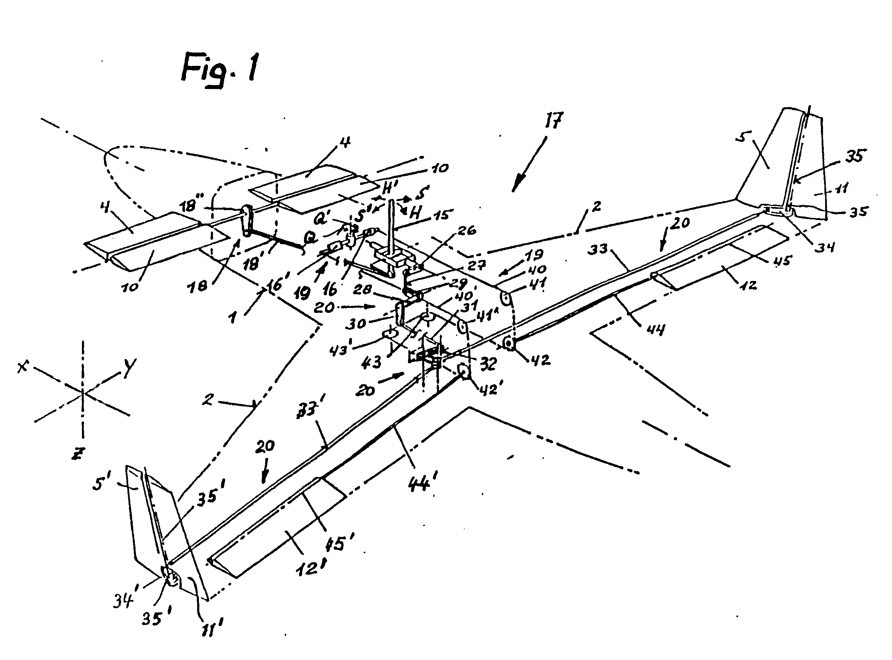

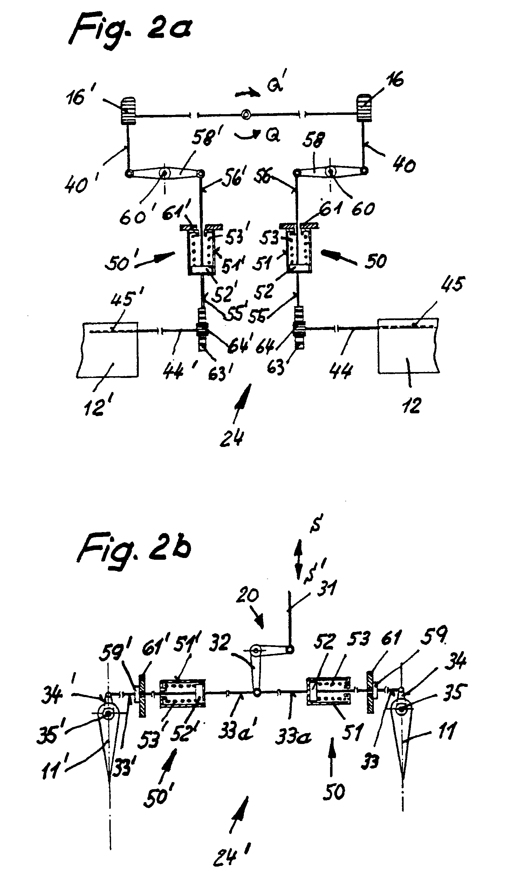

Im einzelnen enthält bei der beschriebenen Ausführungsform der Steuereinrichtung 17 gemäß Fig. 1 das Steuergetriebe 18 ein Steuergestänge 18', das in konventioneller Weise einerseits an die vom Piloten zu betätigende Steuersäule 15 und andererseits über einen Kurbelhebel 18" an der beiden Höhensteuerflächen 10 gemeinsamen Ruderwelle angreift. Die Verstelleinrichtung der in üblicherweise allseits schwenkbaren Steuersäule 15, getrennt betrachtet für die Höhensteuerung, ist ausgehend von der Neutralstellung, dargestellt in Fig. 1, mit **H** für die Höhenänderung: "Steigen" und mit **H'** für die Höhenänderung: "Sinken" angedeutet.

Die Ansteuerung der Steuerflächen **12 bzw. 12'**, die sich entlang der Hinterkante der Tragflügel 2 erstrecken, erfolgt abweichend von der konventionellen Steuerungsart, bei der die Steuerflächen **12,12'** als Querruder zur Änderung der Rollage des Fluggerätes um die Fluggerätelängsachse x dienen, hier über das Steuergetriebe **19** einerseits an die Steuerflächen **12 bzw. 12'** und andererseits an die konventionell der Seitensteuerung zugeordneten Fußpedale **16,16'** für die Betätigung durch den Piloten an.

Das Steuergetriebe **19** enthält hier Steuerseilteile 40 bzw. 40', die einerseits auf der einen bzw. anderen Seite der Pedalschwenkachse der Pedale 16, 16' und andererseits an den Steuerflächen 12 bzw. 12' der einen bzw. anderen Flugzeugseite angreifen. Die Steuerseilteile 40 bzw. 40' stehen miteinander in Verbindung und sind über Umlenkrollen 41, 41'; 42, 42' und 43, 43' des Steuergetriebes 19 geführt. Die Seilrollen 42 bzw. 42' sind fest

angeordnet auf Steuerwellen 44 bzw. 44', die mit den Schwenkachsen 45 bzw. 45' der Steuerflächen 12 bzw. 12' fest verbunden sind.

Die Verstellrichtung der Pedale 16, 16' gemäß Figur 1 ist mit Q' für eine Schwenkung im Sinne der Uhrzeigerdrehung und mit Q für eine Verstellrichtung entgegen der Uhrzeigerdrehung angedeutet, was der konventionellen Seitensteuerung mit Q nach "rechts" und Q' nach "links", mit Hilfe der Seitensteuerflächen 12 bzw. 12' gemäß der Erfindung, entspricht.

In das Steuergetriebe 19 ist an geeigneter Stelle, z.B. in den geschlossenen Steuerseilzug 40, 40' ein Verzerrgetriebe 24 gemäß Figur 2a eingesetzt, dessen Aufgabe darin besteht, einen wechselseitigen Ausschlag der Steuerflächen 12 bzw. 12', ausgehend von der Steuerflächenmittel- bzw. Neutralstellung, jeweils in eine Ausschlagrichtung zu bewirken. Dazu weist das Getriebe 24 zwei Überdrückeinrichtungen 50 bzw. 50' für jede der Flugzeugseiten, das heißt für jede der Steuerflächen 12 bzw. 12' der einen bzw. anderen Flugzeugseite auf. Die Überdrückeinrichtungen enthalten je einen Zylinder 51 bzw. 51' und einen darin gegen die Wirkung einer Druckfeder 53 bzw. 53' axial beweglichen Kolben 52 bzw. 52'. Den Zylindern 51 bzw. 51' ist ein gehäusefester (feststehender) Anschlag 61 bzw. 61' zugeordnet. Es ist ferner in die geschlossene Seilführung 40, 40' eine Spannvorrichtung mit einer Federung mit abgefangener Vorspannung eingesetzt. Die Überdrückwirkung der Einrichtungen 50 bzw. 50', bezogen auf die eingeleitete Steuerbewegung über die Pedale 16 bzw. 16', das heißt bezüglich der Bewegung der Steuerflächen 12 bzw. 12', ist einander entgegengerichtet.

Am Zylinder 51 bzw. 51' greift dabei eine Schubstange 55 bzw. 55' und am Kolben 52 bzw. 52' eine Schubstange 56 bzw. 56' an, wobei die Schubstangen 56 bzw. 56' an um Achsen 60 bzw. 60' schwenkbaren Doppelhebeln 58 bzw. 58' und die Schubstangen 55 bzw. 55' an Zahnstangen 63 bzw. 63' befestigt sind. Die freien Enden der Hebel 58 bzw. 58' sind dabei angeschlossen an die Steuerseilenden 40 bzw. 40'. Die Zahnstangen 63 bzw. 63' stehen im Eingriff mit auf den Steuerwellen 44 bzw. 44' festen Zahnritzeln 64 bzw. 64', die zu den Fußpedalen 16 bzw. 16' führen.

Wie aus Figur 1 zu erkennen ist, erfolgt die Ansteuerung der Steuerflächen 11 bzw. 11' an den Flügelendteilen 5 bzw. 5', abweichend von der konventionellen Steuerung, bei der diese Steuerflächen als Seitenruder zur Änderung der Lage des Fluggerätes umd die Flugzeughochachse z dienen, hier über das Steuergetriebe 20 zur Quersteuerung.

Dabei schließt das Steuergetriebe 20, ausgehend von der kardanisch aufgehängten Steuersäule 15, über einen Hebel 26 und eine Stange 27, über eine Welle 28 und Hebel 29 bzw. 30, sowie eine Stange 31 und einen Winkelhebel 32 an die Schaltstangen 33 bzw. 33' an. Die Schaltstangen 33 bzw. 33' betätigen über Hebel 34 bzw. 34' und Achsen 35 bzw. 35' die Steuerflächen 11 bzw. 11'.

In Figur 2b ist als Ausführungsform des Steuergetriebes 20 zur Betätigung der Steuerflächen 11, 11' ein Verzerrgetriebe 24' eingesetzt. Hierbei schließt die Stange 31 über den Winkelhebel 32 an Schaltstangenteile 33, 33' bzw. 33a, 33a' an, die über die Hebel 34 bzw. 34' an den Steuerflächenachsen 35, 35' der Steuerflächen 11 bzw. 11' angreifen.

In die Schaltstangen 33 bzw. 33' sind, wie bei der Ausführung gemäß Figur 2a, Überdrückeinrichtungen 50 bzw. 50' eingesetzt, die je ein Zylindergehäuse 51 bzw. 51', einen darin verschiebbaren Kolben 52 bzw. 52' und eine Federung 53 bzw. 53' zwischen dem Kolben und dem Zylindergehäuse besitzen. Das Zylindergehäuse 51 bzw. 51' ist mit den Stangenteilen 33a bzw. 33a', und der Kolben mit den Stangenteilen 33 bzw. 33' verbunden. Es sind ferner noch feststehende Anschläge 61 bzw. 61' und mit diesen zusammenwirkend an den Stangen 33 bzw. 33' fest angebrachte Gegenanschläge 59 bzw. 59' vorgesehen.

Anstelle der Verzerrgetriebe 24 bzw. 24' ist es auch denkbar, Getriebe vorzusehen, deren Aufgabe es ist, eine gegenüber der Größe der Steuerbefehleingabe z.B. über das Steuerorgan 15 bzw. das Steuerorgan 16, 16' differenzierte Größe der Verstellbewegung der Steuerflächen 11 bzw. 11'; 12 bzw. 12' in einem vorbestimmten Verhältnis zueinander zu bewirken. Es ist ferner auch denkbar, die Fluggerätesteuerung so auszulegen, daß die Ruderflächen 11 bzw. 11' bei ihrer Betätigung jeweils aus der Neutralstellung wechselseitig nach außen daß heißt von der Fluggerätelängsmittelebene weggerichtet verstellt werden.

Die Wirkungsweise der beschriebenen Steuerung ist wie nachfolgend beschrieben:
Bei Einleitung eines Kurvenfluges erfolgt zunächst die Betätigung der dominierenden Rollsteuerung mittels dem Steuerausschlag der Steuersäule 15 in Pfeilrichtung S bzw. S'. Über das zugehörige Steuergetriebe 20 in Verbindung mit dem in dieses eingesetzten Verzerrgetriebe 24' wird ein Steuerausschlag der einen oder anderen Steuerfläche 11 bzw. 11' bewirkt.

Sekundär wird mittels der Fußpedale 16, 16' die dominierende Seitensteuerung über das Getriebe 19 und das zwischengeschaltete Verzerrgetriebe 24 (Figur 2a) und damit je nach Betätigungsrichtung die Steuerfläche 12 bzw. 12' aus der Neutralstellung ausgeschlagen.

Die Sekundäreffekte, beider Ruderbetätigungen und damit Ruderausschläge (Steuerflächen 11, 11' bzw. 12, 12'), müssen wie bisher bei konventioneller Ruderbetätigung sinnrichtig sein, das heißt bei Quersteuerung "rechts" mittels dem Ausschlag der Steuerfläche 11 soll auch ein leichtes Giermoment "rechts" wirksam sein.
Bei Seitensteuerung "rechts" mittels Ausschlag der Steuerfläche 12 soll entsprechend ein leichtes Rollmoment "rechts" erzeugt werden.

Die Größe der Sekundäreffekte beim Ausschlag der Steuerflächen 11, 11';12, 12' bestimmt die Differenzierung bezüglich der Ausschlaggröße und die Ausschlagrichtung der Steuerflächen 11, 11' gegenüber den Steuerflächen 12, 12'.
Dies trifft auch zu im Verhältnis der Steuerausschläge der Steuerflächen 11 und 11' bzw. 12 und 12' untereinander mit Hilfe der Verzerrgetriebe 24 bzw. 24' oder auch hier nicht näher beschriebener Verzerrgetriebe, mittels denen die an den Steuerorganen 15 bzw. 16, 16' eingeleiteten Steuerbewegungen verzerrt, das heißt differenziert auf die Steuerflächen 11 und 11' bzw. 12, 12' einer Steuerungsart übertragen werden. Dazu können die Verzerrgetriebe in bekannter Weise Rastgetriebe mit Hebelelementen oder Kurvenführungen oder dergleichen enthalten.

Die nach Figuren 2a bzw. 2b dargestellten Rastgetriebe 24 bzw. 24' bewirken, daß bei Betätigung der Steuerorgane 15 bzw. 16, 16' nur jeweils eine der Steuerflächen 11, 11' bzw. 12, 12' jeder Steuerungsart verstellt wird, während die andere zugehörige Steuerfläche in Neutrallage verbleibt.

Während auf der einen Steuerseite die Überdrückeinrichtung 50 oder ein Einrichtung 50' als starres Ganzes die eingeleitete Steuerbewegung auf die angeschlossene Steuerfläche 11, 11'; 12, 12' überträgt, bewirkt die andere Überdrückeinrichtung 50 oder 50' durch Abstützung am festen Anschlag 61, 61' und Verstellung des Kolbens 52, 52' gegen die Wirkung der Federung 53, 53' eine Überdrückbewegung, bei der die angeschlossene Steuerfläche im Ruhelage (Neutrallage) verbleibt, während das Steuergetriebe seine Steuerbewegung leer ausführen kann.

Die vorgeschlagene Fluggerätesteuereinrichtung ist in gleicher Weise auch in Verbindung mit der Umschaltung der Handsteuerung auf eine Autopilotensteuerung einsetzbar.

**Ansprüche**

1. Fluggerätesteuerung, enthaltend eine Quersteuerung mit Quersteuerflächen und Steuergetriebe, eine Seitensteuerung mit Seitensteuerflächen und Seitensteuergetriebe, für Fluggeräte, deren Tragflügelenden sogenannte winglets, Endscheiben oder dergleichen aufweisen, wobei die Endteile die konventionell zur Seitensteuerung dienenden Steuerflächen tragen, **dadurch gekennzeichnet,** dass die konventionell zur Seitensteuerung dienenden Steu-

erflächen (11, 11'), angeordnet an den Endteilen (5, 5'), über ein Steuergetriebe (20; 20') an das konventionell zur Quersteuerung dienende Betätigungsorgan (Steuersäule) (15) und die konventionell zur Quersteuerung dienenden Steuerflächen (12, 12'), angeordnet an der Hinterkante der Flugzeugtragflügel (2), über ein Steuergetriebe (19; 19') an das konventionell zur Seitensteuerung dienende Betätigungsorgan (Fußpedale) (16, 16') angeschlossen sind.

2. Fluggerätesteuerung nach Anspruch 1, **dadurch gekennzeichnet**, daß die Steuergetriebe (**19; 19' bzw. 20; 20'**) Rastzeiten bzw. Bewegungsübersetzungen oder Bewegungsuntersetzungen zwischen der eingeleiteten Steuerbewegung durch die Steuerorgane (**16, 16' bzw. 15**) auf die Steuerflächen (**11, 11' bzw. 12, 12'**) bzw. das Getriebeausgangsglied übertragen.

3. Fluggerätesteuerung nach Anspruch 1, **dadurch gekennzeichnet,** daß in die Steuergetriebe (**19; 19' bzw. 20; 20'**) der Steuerflächen (**12 bzw. 12'; 11 bzw. 11'**) zwischen die Steuerorgane (**16, 16' bzw. 15**) und die Steuerflächen Verzerrgetriebe (**20; 24 bzw. 20'; 24'**) zur Erzielung einer wechselseitigen Verstellung der Steuerflächen (**12 bzw. 12'; 11 bzw. 11'**) zueinander eingesetzt sind.

4. Fluggerätesteuerung nach Anspruch 1 oder 3, dadurch gekennzeichnet, daß die Verzerrgetriebe (20; 24 bzw. 20'; 24') Überdrückeinrichtungen (50, 50') aufweisen.

5. Fluggerätesteuerung nach Anspruch 1 bis 4, dadurch gekennzeichnet, daß über das Verzerrgetriebe zwischen dem Steuerorgan (16, 16'; 15) und den Steuerflächen zur Einstellung einer Gierbewegung, bzw. einer Rollbewegung des Fluggerätes, entsprechend dem Steuerausschlag des Steuerorgans (16, 16' bzw. 15) ausschließlich die der inneren Kurvenflugbahn entsprechende Steuerfläche aus der Neutralstellung verstellbar ist.

6. Fluggerätesteuerung nach Anspruch 1, dadurch gekennzeichnet, daß zwischen dem Betätigungsorgan (16, 16' bzw. 15) und den Steuerflächen (11, 11' bzw. 12, 12') Verzerrgetriebe vorgesehen sind, mittels denen die Seitensteuerflächen (11 bzw. 11') bzw. die Quersteuerflächen (12 bzw. 12') untereinander in Abhängigkeit von der Stellgröße, eingeleitet durch die Betätigungsorgane (16, 16' bzw. 15) differenzierte Steuerwege ausführen.

## Claims

1. Flight control system containing a lateral control system with lateral control surfaces and control transmission, a bearing control system with bearing control surfaces and bearing control transmission, for aircraft of which the wing ends are provided with so-called winglets, end plates or the like, wherein the end plates bear the control surfaces which conventionally serve for the bearing control system, characterised in that the control surfaces (11, 11') which conventionally serve for bearing control and are arranged on the end plates (5, 5'), are connected via a control transmission (20, 20') to the operating control (control column) (15) which conventionally serves for lateral control, and in that the control surfaces (12, 12') which conventionally serve for lateral control and are arranged on the rear edge of the wings (2) of the aircraft are connected via a control transmission (19, 19') to the operating control (foot pedals) (16, 16') which conventionally serves for bearing control.

2. Flight control system according to claim 1, characterised in that the control transmissions (19, 19', or 20, 20') transmit dwell periods or increased transmission of motion or reduced transmission of motion between the initiated control movement to the control surfaces (11, 11', or 12, 12') or to the transmission output member by means of the flying controls.

3. Flight control system according to claim 1, characterised in that distorting transmissions (20, 24, or 20', 24') are inserted in the control transmissions (19, 19', or 20, 20') of the control surfaces (12 or 12', 11 or 11') between the flying controls (16, 16' or 15) and the control surfaces in order to achieve a reciprocal adjustment of the control surfaces (12 or 12', 11 or 11') with respect to one another.

4. Flight control system according to claim 1 or 3, characterised in that the distorting transmissions (20, 24 or 20', 24' ) comprise excess pressure devices (50, 50').

5. Flight control system according to claims 1 to 4, characterised in that the control surface which corresponds to the inner curvilinear path of travel, exclusively, can be adjusted from its neutral position via the distorting transmission between the flying control (16, 16'; 15) and the control surfaces in order to set a yawing motion or a rolling motion of the aircraft corresponding to the controlling deflection of the flying control (16, 16' or 15).

6. Flight control system according to claim 1, characterised in that between the operating control (6, 16' or 15) and the control surfaces (11, 11' or 12, 12') there are provided distorting transmissions, by means of which the bearing control surfaces (11 or 11') or the lateral control surfaces (12 or 12') carry out differentiated control paths dependent upon the control output initiated by the operating controls (16, 16' or 15).

## Revendications

1. Commandes de pilotage, comprenant une commande latérale avec gouvernes latérales et mécanisme de commande, une commande de direction avec gouvernes de direction et mécanisme de commande de direction pour des aéronefs dont les extrémités de voilure présentent des éléments dits winglets, flasques terminales ou analogues, les éléments d'extrémité portant les gouvernes servant traditionnellement à la commande de direction, **caractérisées en ce** en ce que les gouvernes (11, 11') servant traditionnellement à la commande de direction et montées sur les éléments d'extrémité (5, 5') sont raccordées, Par l'intermédiaire d'un mécanisme de commande (20; 20'), à l'organe de manoeuvre (manche pilote) (15) servant traditionnellement à la commande latérale et que les gouvernes (12, 12') servant traditionnellement à la commande latérale et montées sur le bord de fui te de la voilure (2) de l'avion sont raccordées, par l'intermédiaire d'un mécanisme de commande (19; 19'); à l'organe de manoeuvre (pédales) (16, 16') servant traditionnellement à la commande de direction.

2. Commandes de pilotage selon la revendication 1, caractérisées en ce que Tes mécanismes de commande (19; 19' et respectivement 20; 20') transmettent, au moyen des organes de manoeuvre (16, 16' et respectivement 15), des temps de repos et respectivement des multiplications et démultiplications de mouvement entre le mouvement de commande déclenché aux gouvernes (11, 11' et respectivement 12, 12') ou à l'organe de sortie du mécanisme.

3. Commandes de pilotage selon la revendication 1, caractérisées en ce que dans Tes mécanismes de commande (19; 19' et respectivement 20; 20') des gouvernes (12 et respectivement 12'; 11 et respectivement 11'), des mécanismes de distorsion (20; 24 et respectivement 20'; 24') sont intercalés entre les organes de manoeuvre (16, 16' et respectivement 15) pour permettre un déplacement alternatif des gouvernes (12 et respectivement 12'; 11 et respectivement 11') les unes par rapport aux autres.

4. Commandes de pilotage selon l'une des revendications 1 ou 3, caractérisées en ce que les mécanismes de distorsion (20; 24 et respectivement 20'; 24') comprennent des dispositifs de surpression (50, 50').

5. Commandes de pilotage selon l'une des revendications 1 à 4, caractérisées en ce que, pour le réglage d'un mouvement de lacet et respectivement d'un mouvement de roulis de l'aéronef, seule la gouverne correspondant à la courbe de vol intérieure peut être déplacée de la position neutre, par l'intermédiaire du mécanisme de distorsion entre l'organe de manoeuvre (16, 16'; 15) et les gouvernes, conformément au déplacement de l'organe de manoeuvre (16, 16' et respectivement 15).

6. Commandes de pilotage selon la revendication 1, caractérisées en ce qu'entre l'organe de manoeuvre (16; 16' et respectivement 15) et les gouvernes (11; 11' et respectivement 12; 12') sont prévus des mécanismes de distorsion au moyen desquels les gouvernes de direction (11 et respectivement 11') et respectivement les gouvernes latérales (12 et respectivement 12') effectuent les unes par rapport aux autres des trajets de commande différenciés en fonction de la grandeur de réglage initiée par les organes de manoeuvre (16, 16' et respectivement 15).

Fig. 1

# Fig. 2a

# Fig. 2b